## Europäisches Patentamt

## European Patent Office
## Office européen des brevets

(11) Veröffentlichungsnummer: **0 240 917**
A2

# (12) EUROPÄISCHE PATENTANMELDUNG

(21) Anmeldenummer: 87104796.5

(51) Int. Cl.⁴: **B23B 51/00**

(22) Anmeldetag: 01.04.87

(30) Priorität: 09.04.86 DE 8609592 U
28.05.86 DE 3617932

(43) Veröffentlichungstag der Anmeldung:
14.10.87 Patentblatt 87/42

(84) Benannte Vertragsstaaten:
CH DE FR GB IT LI

(71) Anmelder: Hawera Probst GmbH + Co.
Schützenstrasse 77
D-7980 Ravensburg(DE)

(72) Erfinder: Peetz, Wolfgang, Dipl.-Ing.
Im Kalkofen 51
D-7981 Blitzenreute(DE)
Erfinder: Moser, Bernhard
Ulrichstrasse 31
D-7963 Altshausen(DE)

(74) Vertreter: Patentanwälte Dipl.-Ing. E. Eisele
Dr.-Ing. H. Otten
Seestrasse 42
D-7980 Ravensburg(DE)

(54) **Bohrvorrichtung zur Herstellung von Bohrlöchern mit Hinterschneidung.**

(57) Es wird eine Bohrvorrichtung vorgeschlagen, die zur Herstellung von Bohrlöchern mit Hinterschneidungen dient. Um eine bessere Führung zwischen Bohrwerkzeug und Bohreraufnahme auch bei sich lockerndem Gewinde zu gewährleisten, werden zusätzliche Führungsflächen (32, 35) vorgesehen, die sich formschlüssig in angepaßte Bohrungen abstützen.

Fig 3

EP 0 240 917 A2

## "Bohrvorrichtung zur Herstellung von Bohrlöchern mit Hinterschneidung"

Die Erfindung betrifft eine Bohrvorrichtung zur Herstellung von Bohrlöchern mit Hinterschneidung, mit einem Bohrwerkzeug mit radial den Bohrerschaft überragenden Seitenschneiden, wobei das Bohrwerkzeug über ein Außengewinde mit einer, einen Einspannschaft für einen Bohrhammer aufweisenden Bohreraufnahme mit Innengewinde verbunden ist, die mit einem kugelförmigen Bund zur Bildung eines Schwenklagers an eine Anschlagplatte versehen ist.

Eine Bohrvorrichtung gemäß dem Gattungsbegriff ist aus der deutschen Offenlegungsschrift 34 23 633 bekannt geworden. Eine weitere Bohrvorrichtung ist in der DE-PS 30 27 408 beschrieben.

Das Prinzip dieser bekannten und der vorliegenden Bohrvorrichtung beruht darauf, daß durch ein Schwenken des Bohrers mit Bohreraufnahme in einem Schwenklager eine Hinterschneidung durch die Seitenschneiden des Bohrerkopfs erzeugt wird.

Die bekannten Bohrvorrichtungen weisen einen Bohrerschaft mit einem am Ende vorgesehenen Außengewinde auf, welches in das Innengewinde der Bohreraufnahme eingeschraubt wird. Diese zweiteilige Ausführung ist im allgemeinen erforderlich, da der Bohrer mit radial nach außen ragenden Seitenschneiden durch das vorhandene Bohrungs-Zentrierrohr bzw. den Zentrieransatz infolge des größeren Durchmessers nicht hindurchgesteckt werden kann. Außerdem ist der Bohrer als Verschleißwerkzeug ausgebildet, während die von der Formgebung aufwendig konstruierte Bohreraufnahme mit Einspannschaft und kugelförmigen Bund wieder verwendet werden kann.

Derartige Bohrvorrichtungen werden in Bohrhämmern eingesetzt mit beispielsweise einer Drehzahl von 1000 U/Min und z. ·B. 3000 Schlägen/Min. Durch die hämmernde Beanspruchung des Werkzeuges ist das Gewinde zwischen Bohrer und Bohreraufnahme starken Wechselbedingungen unterworfen. Um Brüche im Gewinde zu vermeiden, wird im allgemeinen ein Rundgewinde verwendet. Die hämmernde Beanspruchung führt leicht zu einem Lösen der Schraubverbindung zwischen Bohrer und Bohreraufnahme, so daß keine starre Verbindung zwischen diesen beiden Teilen mehr gegeben ist. Vielmehr kann das Bohrwerkzeug selbst gegenüber der Bohreraufnahme eine gewisse Schwenkbewegung durch das gelockerte Gewinde ausführen, wodurch das Bohrergebnis, besonders zur Herstellung der Hinterschneidung, negativ beeinflußt wird.

Der Erfindung liegt die Aufgabe zugrunde, die vorgenannten Nachteile zu vermeiden und insbesondere eine Bohrvorrichtung zu schaffen, bei welcher eine bessere Führung zwischen Bohrwerkzeug und Bohreraufnahme auch bei sich lockerndem Gewinde gewährleistet ist. Aufgabe der Erfindung ist es weiterhin, durch konstruktive Maßnahmen von vorne herein ein sich Lockern des Gewindes zu vermeiden.

Diese Aufgabe wird ausgehend von einer Bohrvorrichtung der einleitend bezeichnenden Art erfindungsgemäß dadurch gelöst, daß das Bohrwerkzeug im Anschluß an das Außengewinde einen zusätzlichen Führungszapfen aufweist, der formschlüssig in eine, an den Führungszapfen angepaßte Sacklochbohrung im Anschluß an das Innengewinde der Bohreraufnahme eingreift.

Die Erfindung hat gegenüber ·den bekannten Vorrichtungen den Vorteil, daß die Verbindung zwischen dem Bohrwerkzeug und der Bohreraufnahme nicht allein auf dem Bereich des Gewindes mit einem gewissen Spiel beschränkt ist. Durch die formschlüssige Verbindung des zusätzlichen Führungszapfens werden insbesondere auch Biegemomente bzw. Biegespannungen über den Führungszapfen und nicht über das Gewinde zwischen den Teilen weitergeleitet. Hierdurch wird das Gewinde zwischen den beiden Teilen insgesamt entlastet, wobei die Schlagenergie von der Bohrmaschine über den Führungszapfen und nicht über die Gewindegänge auf die Bohrerspitze übertragbar ist. Hierdurch wird ein sich Lösen und eine Beanspruchung des Gewindes weitgehend vermieden.

Sollte sich das Gewinde dennoch lösen, so bleibt der Bohrer durch den Führungszapfen weiterhin genauestens geführt und taumelt nicht durch ein Gewindespiel hin und her.

Durch die in den Unteransprüchen aufgeführten Maßnahmen sind vorteilhafte Weiterbildungen und Verbesserungen der Bohrvorrichtung gemäß Hauptanspruch möglich.

Die Ausbildung der Erfindung gemäß Unteranspruch 2 mit auf dem Sacklochboden aufstoßenden Führungszapfen ist alternativ zu sehen. Dies hat - wie bereits erwähnt - den Vorteil, daß die Schlagenergie von der Bohreraufnahme direkt in den Bohrer über den Führungszapfen und nicht über die Gewindegänge eingeleitet werden kann. Sofern zwischen Sacklochboden und unterem Ende des Führungszapfen ein Zwischenraum verbleibt, muß die Energieübertragung ausschließlich über die Gewindegänge erfolgen. Das Gewinde muß dann entsprechend stark angezogen werden.

Gemäß der weiteren Ausbildung der Erfindung nach Unteranspruch 3 muß der Führungszapfen eine gewisse Mindestlänge aufweisen, um seine Führungsfunktion auszuüben. Als kürzeste Länge dürfte ein Verhältnis zwischen Länge und Durchmesser des Zapfens von I angesehen werden. Besonders vorteilhaft ist ein Längen/Durchmesserverhältnis von 3.

Die Länge des Führungszapfens sollte gemäß der Weiterbildung der Erfindung nach Unteranspruch 4 in etwa der Länge des Gewindes entsprechen. Hierdurch wird ein vernünftiges Verhältnis zwischen Führungslänge und Gewindeaufstandsfläche erzielt.

In an sich bekannter Weise erfolgt die weitere Ausbildung der Erfindung dahingehend, daß das Außen-bzw. Innengewinde als Rundgewinde, insbesondere nach DIN 405 ausgebildet sind.

Die alternative Ausbildung der Erfindung nach den Ansprüchen 6 und 7 betrifft ein zusätzliches Führungsmittel des Bohrwerkzeugs im Bereich oberhalb des Gewindes. Durch diese zweite Führungsfläche wird eine noch bessere Abstützwirkung der Bohrvorrichtung erzielt.

Vorteilhafte und zweckmäßige Ausführungsbeispiele der Erfindung sind in der Zeichnung dargestellt und in der nachfolgenden Beschreibung näher erläutert. Es zeigen

Fig. I einen Schnitt durch die erfindungsgemäße Bohrvorrichtung in einem Mauerwerk,

Fig. 2 eine Ansicht des Bohrers mit verlängertem Führungszapfen,

Fig. 3 und 4 eine alternative Ausführungsform der Erfindung nach Fig. I und 2.

Zur Beschreibung des Aufbaus und der Funktionsweise der erfindungsgemäßen Bohrvorrichtung im allgemeinen wird auf die eingangs erwähnte DE-OS 34 23 633 mit entsprechenden Literaturhinweisen hingewiesen. Vom gleichen Anmelder wie die oben genannte Offenlegungsschrift ist das Prinzip der erfindungsgemäßen Bohrvorrichtung unter der Bezeichnung "ZYKON-Bohrer" bekannt geworden. Hierzu liegen Prospekte der Firma "Fischer Dübel" vor.

Die in der Fig. I dargestellte Bohrvorrichtung (I0) besteht aus einem Bohrwerkzeug (II) mit Bohrerschaft (I2) und Bohrspitze (I3), mit radial nach außen gerichteten Seitenschneiden (I4). Das Bohrwerkzeug (II) weist in seinem Bereich ein Rundgewinde (I5) als Außengewinde auf, welches in ein entsprechend angepaßtes Innengewinde (I6) einer Bohreraufnahme (I7) eingreift. Die Bohreraufnahme (I7) weist einen Einspannschaft (I8) zur Aufnahme in eine nicht näher dargestellte Schlagbohrmaschine auf.

Die Bohreraufnahme (I7) weist in ihrem oberen Bereich einen kugelförmigen Bund (I9) auf, der mit einer entsprechend angepaßten Mulde (20) einer Anschlagplatte (2I) zur Bildung eines Schwenklagers zusammenwirkt. Die aus Metall gefertigte Anschlagplatte (2I) ist nach oben hin durch einen rohrförmigen Zentrieransatz (22) verlängert.

Im Ausführungsbeispiel ist die Anschlagplatte (2I) von einem Kunststoffgehäuse (23) umgeben, welches topfförmig mit nach unten zeigender Öffnung ausgebildet ist. In dieses Gehäuse (23) greift ein von unten aufzusteckendes Schließteil (24) mit einer topfförmigen, nach oben gerichteten Wandung (25) ein. Das Kunststoffgehäuse (23) und das Schließteil (24) werden durch ein sie verbindendes Gewinde (26) verbunden. Zur Öffnung des Schließteils (24) vom Kunststoffgehäuse (23) ist der untere Bereich (27) des Schließteils (24) als Rändelmutter (27) ausgebildet.

Die axiale Sicherung der Bohreraufnahme (I7) gegenüber der Anschlagplatte (2I) erfolgt durch einen Bund (28), der sich auf der inneren Wandung (29) des Schließteils (24) abstützt.

Das zu bohrende Material ist mit dem Bezugszeichen (30) dargestellt. Die Bohrvorrichtung nach Fig. I stößt demnach in der tiefsten Bohrlochstellung gegen die Wand (3I) an.

Die Erzeugung der Hinterschneidung (34) im zu bohrenden Material (30) erfolgt in an sich bekannter Weise durch eine Schwenkbewegung des kugelförmigen Bundes (I9) in der Mulde (20) der Anschlagplatte (2I), d. h. durch Vollziehen einer Taumelbewegung der Bohrspitze (I3) mit den Seitenschneiden (I4). Hierzu wird auf die DE-OS 34 23 633 verwiesen.

Erfindungsgemäß weist die Vorrichtung im Anschluß an das Rundgewinde (I5) einen zusätzlichen Führungszapfen (32) auf, der in einer Sacklochbohrung (33) der Bohreraufnahme (I7) formschlüssig, d. h. ohne Spielbewegung eingreift. Hierdurch erhält das Bohrwerkzeug (II) eine zusätzliche Führung in der Bohreraufnahme (I7), die sich nicht ausschließlich auf die Führung des mit Spiel behafteten Gewindes beschränkt.

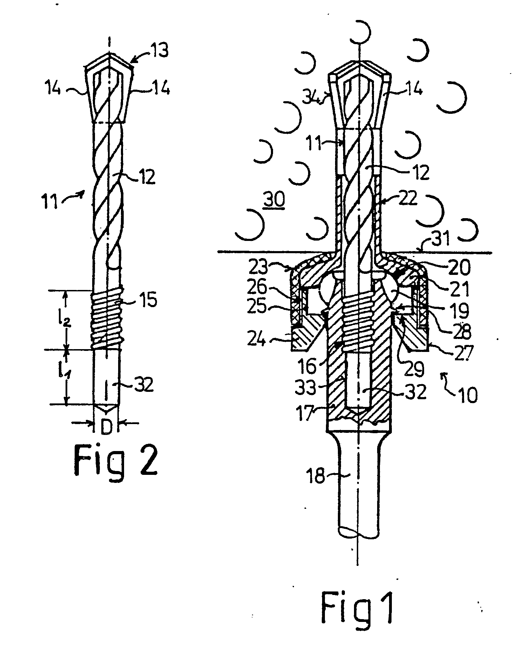

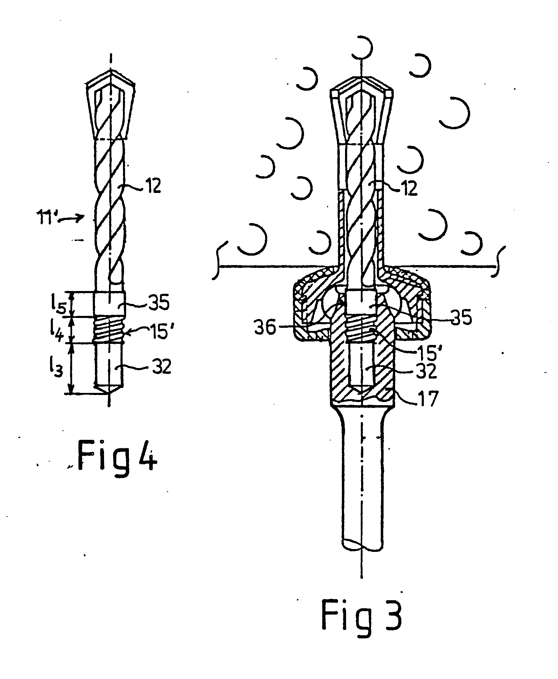

Die Ausführung des Bohrwerkzeugs (II) mit zusätzlichem Führungszapfen (32) ist in Fig. 2 in Einzeldarstellung gezeigt.

In Fig. 2 ist weiterhin das Verhältnis der Länge $l_1$ des Führungszapfens (32) zum Durchmesser (D) des Führungszapfens gezeigt. Dieses Verhältnis ($l_1$) zu (D) sollte ≥ I, vorzugsweise 3 betragen.

Gemäß der Darstellung in Fig. 2 sollte das Verhältnis zwischen der Länge des Führungszapfens ($l_1$) und der Länge des Gewindes ($l_2$) etwa I : I betragen. Hierdurch wird gewährleistet, daß das Gewinde durch einen ausreichend langen Führungszapfen unterstützt wird.

Bei einem Außengewindedurchmesser von beispielsweise I0 mm wird eine Gewindelänge von $l_2$ = 20 mm und einer Zapfenlänge von $l_1$ = 20 mm gewählt. Der Führungszapfen (32) selbst hat dann einen Durchmesser (D) ≈ 6 mm. Selbstverständlich können diese Maße in entsprechend angepaßten Größenordnungen variieren.

In den Figuren 3 und 4 ist eine alternative Ausführungsform der Erfindung nach Fig. I und 2 dargestellt. Zusätzlich zum Führungszapfen (32) weist das Bohrwerkzeug (II) oberhalb des Gewindes (I5') eine weitere Führungsfläche (35) auf, die im Ausführungsbeispiel als kreiszylindrische Fläche ausgebildet ist. Diese zusätzliche obere Führungsfläche (35) stützt sich an der inneren Zylinderbohrung (36) der Bohreraufnahme (I7) ab, so daß das Gewinde (I5') sowohl unterhalb des Gewindes (I5') durch den Führungszapfen (32) als auch oberhalb des Gewindes (I5') durch den Führungszylinder (35) abgestützt ist. Die obere (35) und die untere (32) Abstützung kann ggf. auch als konische Abstützung mit entsprechend angepaßter Formgebung in der Bohreraufnahme (I7) ausgebildet sein. Dies insbesondere dann, wenn der Bohrerdurchmesser des Bohrerschafts (I2) wesentlich größer ist als der Durchmesser des Gewindes (I5, I5') sowie des Durchmessers der zugehörigen Führungsmittel (32, 35).

In der Fig. 4 ist das Bohrwerkzeug (II') analog zur Darstellung in Fig. 2 dargestellt. Durch die zusätzliche obere Führungsfläche (35) kann das Gewinde (I5') in seiner axialen Länge (I₄) verkürzt ausgeführt sein. Das bevorzugte Verhältnis der Längen (I₃) des Führungszapfens (32) zu (I₄) des Gewindes (I5') zu (I₅) des zusätzlichen Führungszylinders (35) beträgt (I₃ : I₄ : I₅ = 2 : I : I).

Die Anordnung nach Fig. 3 und 4 hat weiterhin den Vorteil, daß durch die doppelte Führung mittels des Führungszapfens (32) und des Führungszylinders (35) die Toleranzen des Gewindes (I5') sehr groß gehalten werden können, da das Gewinde keinerlei Führungsaufgabe mehr übernehmen muß.

Bei einem Bohrwerkzeug (II') mit einem Bohrerschaftdurchmesser von z. B. IO mm beträgt I₃ ≈ I5 - 20 mm, I₄≈ IO mm und I₅≈ IO mm.

Im übrigen entspricht die Vorrichtung gemäß der Darstellung in Fig. 3 und 4 der Ausführungsform nach Fig. I und 2.

## Ansprüche

I. Bohrvorrichtung zur Herstellung von Bohrlöchern mit Hinterschneidung, mit einem Bohrerwerkzeug mit radial den Bohrerschaft überragenden Seitenschneiden, wobei das Bohrwerkzeug über ein Außengewinde mit einer, einen Einspannschaft für einen Bohrhammer aufweisenden Bohreraufnahme mit Innengewinde verbunden ist, die mit einem kugelförmigen Bund zur Bildung eines Schwenklagers an einer Anschlagplatte versehen ist, dadurch gekennzeichnet, daß das Bohrwerkzeug (II) im Bereich des Außengewindes (I5) wenigstens eine zusätzliche Führungsfläche (32) aufweist, die formschlüssig in eine, an die Führungsfläche (32) angepaßte Bohrung (33) im Anschluß an das Innengewinde (I6) der Bohreraufnahme (I7) eingreift.

2. Bohrvorrichtung nach Anspruch I, dadurch gekennzeichnet, daß die Führungsfläche als Führungszapfen (32) ausgebildet ist, der formschlüssig in einer Sacklochbohrung (33) angeordnet ist und sich auf dem Sacklochboden der Sacklochbohrung (33) abstützt.

3. Bohrvorrichtung nach Anspruch I, dadurch gekennzeichet, daß das Verhältnis der Länge (I₁) zum Durchmesser (D) des Führungszapfens (32) gleich oder größer I, vorzugsweise 3 beträgt (I₁/D ≥ I; I₁/D = 3).

4. Bohrvorrichtung nach Anspruch I, dadurch gekennzeichnet, daß das Verhältnis der Länge (I₂) des Gewindes (I5) zur Länge (I₁) des Führungszapfens (32) ca. I : I beträgt.

5. Bohrvorrichtung nach einem oder mehreren der vorhergehenden Ansprüche, dadurch gekennzeichnet, daß das Außengewinde (I5) des Bohrwerkzeugs (II) bzw. das Innengewinde (I6) der Bohreraufnahme (I7) als Rundgewinde, insbesondere nach DIN 405 ausgebildet ist.

6. Bohrvorrichtung zur Herstellung von Bohrlöchern mit Hinterschneidung, mit einem Bohrerwerkzeug mit radial den · Bohrerschaft überragenden Seitenschneiden, wobei das Bohrwerkzeug über ein Außengewinde mit einer, einen Einspannschaft für einen Bohrhammer aufweisenden Bohreraufnahme mit Innengewinde verbunden ist, die mit einem kugelförmigen Bund zur Bildung eines Schwenklagers an einer Anschlagplatte versehen ist, dadurch gekennzeichnet, daß das Bohrwerkzeug (II) im Anschluß an das Außengewinde (I5) einen zusätzlichen Führungszapfen (32) aufweist, der formschlüssig in eine, an den Führungszapfen (32) angepaßte Sacklochbohrung (33) im Anschluß an das Innengewinde (I6) der Bohreraufnahme (I7) eingreift und daß zusätzlich zum Führungszapfen (32) als Führungsmittel zwischen dem Gewinde (I5) und dem Bohrerschaft (I2) eine zusätzliche zylindrische oder kegelförmige Führungsfläche (35) vorhanden ist, wobei sich diese Führungsfläche (35) in der angepaßten Zylinderbohrung (36) im oberen Bereich der Bohreraufnahme (I7') formschlüssig abstützt.

7. Bohrvorrichtung nach Anspruch 6, dadurch gekennzeichnet, daß das Verhältnis der Längen I₃ : I₄ : I₅ wie 2 : I : I beträgt.

Fig 2

Fig 1

Fig 4

Fig 3